# EUROPÄISCHE PATENTSCHRIFT

(11) **EP 0 424 753 B1**
(45) Veröffentlichungstag und Bekanntmachung des Hinweises auf die Patenterteilung: **10.03.1993**
(21) Anmeldenummer: 90119577.6
(22) Anmeldetag: 12.10.1990
(51) Int. Cl.: A01D 33/10

(54) **Erntemaschine für Wurzelfrüchte, insbesondere Zuckerrüben**
Harvester for root crops, in particular sugar beets
Machine à récolter les tubercules, en particulier les betteraves sucrières

(30) Priorität: 24.10.1989 DE 3935386
(43) Veröffentlichungstag der Anmeldung: 02.05.1991
(73) Patentinhaber: Franz Kleine Maschinenfabrik GmbH & Co., D-33154 Salzkotten (DE)
(72) Erfinder: Lühs, Herbert, W-4793 Büren-Brenken (DE)
(74) Vertreter: Rehberg, Elmar, Dipl.-Ing.

(56) Entgegenhaltungen:
- EP-A- 0 056 873
- DE-A- 2 914 995
- FR-A- 1 563 353
- FR-A- 2 477 367

## Beschreibung

Die Erfindung bezieht sich auf eine Erntemaschine für Wurzelfrüchte, insbesondere Zuckerrüben, mit mindestens einer die Wurzelfrüchte rodenden oder vom Boden aufnehmenden und ggf. reinigenden Einrichtung, von der die Wurzelfrüchte über einen Höhenförderer in einen mit einem Kratzboden versehenen Bunker gelangen, der um eine in Fahrtrichtung liegende Schwenkachse kippbar ist. Die Erfindung kann sowohl bei einer Vollerntemaschine, bei der das Rübenblatt und die Rüben in einem Arbeitsgang geerntet werden, als auch bei Teilmaschinen, insbesondere Anbaumaschinen, gezogenen Hängern wie auch bei Selbstfahrern, angewendet werden.

Aus der DE-A- 29 14 995 ist eine Erntemaschine der eingangs beschriebenen Art bekannt. Auf eine mindestens mit einer Achse ausgestatteten Fahrgestell ist ein Bunker um eine in Fahrtrichtung liegende Schwenkachse kippbar angeordnet. Die Schwenkachse ist außerhalb der Längsmittelachse der Maschine in Richtung auf die feststehende Wandung des Bunkers vorgesehen. Auf der anderen Maschinenseite ist die Überladekante des Bunkers gebildet. Zu diesem Zweck wird die betreffende seitliche Wandung des Bunkers, die um eine außen an der Erntemaschine vorgesehene, ebenfalls in Fahrtrichtung liegende Achse schwenkbar ist, so aufgeklappt, daß der Kratzboden eine gestreckte Anordnung bildet. Das Kippen des Bunkers geschieht über einen Hydraulikzylinder, der entsprechend angesteuert wird. Die in den Bunker zu überführenden Wurzelfrüchte, insbesondere Zuckerrüben, werden entweder von einer Rodeeinrichtung gerodet oder von einer Aufnahmeeinrichtung bereits in gerodetem Zustand, meist im Schwad, abgelegt, aufgenommen, in der Regel auch mit einem Siebrad oder einer ähnlichen Einrichtung gereinigt und schließlich in den Bunker überführt. Hierzu dient ein Höhenförderer, der eine größere Bauhöhe aufweist als es der Oberkante des Bunkers entspricht . Auf diese Art und Weise werden die Wurzelfrüchte im wesentlichen unter Höhengewinn nach oben gefördert und über den oberen Rand des Bunkers in diesen hinabgeworfen. Die große Abwurfhöhe der Wurzelfrüchte in den Bunker wirkt sich insbesondere zu Beginn eines Rode-oder Aufnahmevorgangs nachteilig aus, da insoweit die Gefahr der Beschädigung der Wurzelfrüchte und des Bruchs derselben besteht. Auch die Bunkerbefüllung, also der Befüllungsgrad, mit welchem der von dem Bunker zur Verfügung gestellte Innenraum ausgenutzt werden kann, ist nicht optimal, obwohl es bei dieser Erntemaschine bereits vorgesehen ist, entweder den Höhenförderer ortsfest am Rahmen der Erntemaschine zu lagern und den gesamten Bunker quer zur Fahrt- und Arbeitsrichtung zu verschieben, oder, was ebenfalls sehr aufwendig ist, den Höhenförderer seinerseits um eine niedrig angeordnete Achse kippbar zu lagern, damit die Wurzelfrüchte im Bunker besser verteilt werden können. Beide konstruktiven Lösungen ergeben den Nachteil, daß bei unsachgemäßer Behandlung eine Kippgefahr für die Erntemaschine besteht. Vorteilhaft an dieser Erntemaschine ist jedoch, daß ein Überladen der Wurzelfrüchte von der Erntemaschine auf einen Transportwagen, also aus dem Bunker heraus, möglich ist, ohne daß dabei der Rode- oder Aufnahmevorgang für weitere Wurzelfrüchte unterbrochen werden muß. Der Höhenförderer kann dabei als Wurfförderer ausgebildet werden. Dabei tritt zu dem Nachteil der großen Abwurfhöhe noch der Nachteil der Beschleunigung der Wurzelfrüchte auf, mit der diese den Wurfförderer verlassen. Es ist auch bekannt, solche Höhenförderer als auf der Innenseite befüllbare Umlaufelevatoren auszubilden, die mit ihren Achsen quer zur Fahrtrichtung angeordnet sind. Dabei ist der Umlaufförderer um den gesamten Bunker herumgeführt, d. h. er wird unter dem Kratzboden hindurchgeführt und überstreicht die vordere und hintere Seitenwandung des Bunkers sowie die befindliche Bunkeröffnung. Bei dieser Anordnung des Umlaufelevators, bei dem die Wurzelfrüchte zwar schonender als bei einem Wurfelevator abgeworfen werden, ergeben sich jedoch Platzprobleme im Bereich der Achse der Erntemaschine, über der in der Regel dieser Bunker angeordnet ist. Der Umlaufelevator stellt einen beträchtlichen maschinellen Aufwand dar und ist in seinem umlaufenden Teil auch entsprechend lang ausgebildet. Schließlich vergrößert ein solcher Umlaufelevator die durch die Höhe der Wandung des Bunkers vorgegebene Höhe. Umgekehrt ist bei gegebener Maximalhöhe der Erntemaschine die Höhe der Seitenwandung des Bunkers beschränkt.

Es ist weiterhin eine Erntemaschine bekannt, die mit einer die Wurzelfrüchte aufnehmenden Einrichtung ausgestattet ist. Auch hier ist ein Bunker um eine in Fahrtrichtung liegende Schwenkachse kippbar auf dem Maschinenrahmen angeordnet. Im Bunker ist eine Förderschnecke untergebracht, die lediglich aus einer mit einer Förderwendel teilweise besetzten Welle besteht. Diese Welle ist schiefstehend zur Schwenkachse des Bunkers ortsfest in Seitenwandungen des Bunkers gelagert. Der hierbei eingesetzte Höhenförderer ist zweiteilig ausgebildet. Er besteht in seinem ersten Teil aus einem auf seiner Innenseite befüllbaren Umlaufelevator, dessen Umlenkachsen in Fahrtrichtung weisend vorgesehen sind. Der zweite Teil des Höhenförderers wird von einem angetriebenen Befüllband gebildet, welches in verschiedene Neigungen einstellbar ist. Zur Einstellung des Befüllbands auf eine niedrige Abwurfhöhe im Bunker, wie sie zu Beginn eines Aufnahmevorgangs gegeben ist, ist die Wandung des Bunkers für die Neigungsverstellung des Befüllbands unterbrochen. Der Umlaufelevator und das Befüllband sind hinter dem Bunker angeordnet, also an dem der Fahrtrichtung entgegengesetzten Ende der Maschine. Damit ist der Nachteil verbunden, daß die Wurzelfrüchte auch hier durch den Bereich der Maschine hindurchgeführt werden müssen, in welchem sich eine Achse der Maschine befindet. Vorteilhaft ist mit dieser aufwendigen Einrichtung aber eine gute Befüllung des Bunkers durch die schief eingebaute Schnecke möglich. Weiterhin können während des Überladens bedingt weitere Wurzelfrüchte aufgenommen und in den Bunker gefördert werden, insbesondere dann, wenn die Überladehöhe gering ist. Durch die Anordnung des Befüllbands und die Überbrückung der erforderlichen Neigung ist es nicht möglich, den Umlaufelevator nahe an die Wandung des Bunkers heranzurücken, so daß eine große Baulänge die Folge ist. Ein besonderer Nachteil dieser Maschine besteht jedoch darin, daß die Wurzelfrüchte während des Ladevorgangs von dem Befüllband auf die Schneckenwendel der Förderschnecke abgeworfen werden, und zwar mit relativ großer Abwurfhöhe. Die Anwendung eines Befüllbands stellt einen zusätzlichen Aufwand dar. Um die Wurzelfrüchte im Bereich einer Achse der Maschine unter dem Bunker nach hinten hindurchfördern zu können, wird eine Portalachse angewendet, die ebenfalls einen erhöhten Aufwand darstellt.

Bei einer weiteren bekannten Erntemaschine ist der auf seiner Innenseite befüllbare Umlaufelevator ebenfalls hinter dem Bunker angeordnet. Dabei sind die Umlenkachsen des Umlaufelevators fest mit dem Bunker verbunden, so daß bei einer Kippung des Bunkers auch der Umlaufelevator relativ zum Maschinenrahmen mitbewegt wird. Im Bereich der hinteren Wandung des Bunkers ist außen am Bunker und unterhalb des oberen Trums des Umlaufelevators eine Mulde angeordnet, die zu einer Befüllschnecke gehört, die durch die Wandung des Bunkers hindurchreicht und sich in den Bunkerinnenraum hinein erstreckt. Die Achse der Befüllschnecke ist horizontal in Fahrtrichtung weisend vorgesehen und damit parallel zur Schwenkachse angeordnet, um die der Bunker kippbar ist. Der Versatz der beiden Achsen liegt etwa in der Größenordnung von 1 m. Auf diese Art und Weise sind der Bunker, der Umlaufelevator und die Befüllschnecke mit ihrer Mulde gemeinsam um die Schwenkachse des Bunkers kippbar. Der Bunker besitzt auch hier einen Kratzboden. Die Maschinenachse ist als Portalachse ausgebildet, so daß die Wurzelfrüchte mit Hilfe von Reinigungswellen zunächst unterhalb des Bunkers hindurchgefördert werden, um dann in den Umlaufelevator hinten an der Maschine zu gelangen. Der Nachteil dieser Erntemaschine besteht hauptsächlich darin, daß der Bunker während des Aufnehmens der Wurzelfrüchte nicht gekippt werden darf, also auch ein gleichzeitiges Aufnehmen und Überladen nicht möglich ist. Auch die notwendige Portalachse stellt eine aufwendige Achskonstruktion dar. Vorteilhaft an dieser Erntemaschine ist jedoch, daß die Wurzelfrüchte schonend von dem Umlaufelevator mit geringer Fallhöhe in die Mulde der Befüllschnecke gelangen und sodann, wiederum mit vergleichsweise geringer Abwurfhöhe, in den Bunker herabfallen, sobald sie die Seitenwandung des Bunkers mit Hilfe der Befüllschnecke durchdrungen haben. Die Befüllschnecke läßt einen guten Befüllungsgrad mit entsprechender Verteilung der Wurzelfrüchte über den Innenraum des Bunkers zu.

Weiterhin sind zum Befüllen von Bunkern sogenannte Wurfelevatoren bekannt, die im Gegensatz zu einem Umlaufelevator auf der Außenseite befüllt werden. Sie besitzen in der Regel nur zwei Umlenkachsen und damit einen vergleichsweise einfachen Aufbau. Nachteilig ist, daß die Rüben mit großer Beschleunigung und hoch über den oberen Rand der Wandung des Bunkers in den Innenraum hinabgeworfen werden, so daß eine erhebliche Bruch- und Beschädigungsgefahr besteht. Die Bunkerbefüllung ist vergleichsweise schlechter. Eine Verlagerung der Wurzelfrüchte im Bunker findet nicht statt.

Die Erfindung beschäftigt sich mit dem Problem, eine Erntemaschine der eingangs beschriebenen Art so auszubilden, daß das Kippen des Bunkers in jede gewünschte Stellung hinein, wie es beispielsweise beim Überladen oder auch zur bewußten relativen Verlagerung der Wurzelfrüchte im Bunker während des Rode- oder Aufnahmevorgangs sinnvoll ist, zu ermöglichen, ohne daß der Rode- oder Aufnahmevorgang unterbrochen werden muß oder dabei Wurzelfrüchte verlorengehen, wenn trotzdem der Rode- oder Aufnahmevorgang nicht unterbrochen wird.

Erfindungsgemäß wird dies dadurch erreicht, daß zwischen dem Höhenförderer und dem Bunker eine um eine Drehachse angetriebene Befüllschnecke mit einer gehäuseartigen Mulde vorgesehen ist, daß die Mulde außerhalb des Bunkers an dessen Wandung dem Höhenförderer zugekehrt angeordnet ist und die Befüllschnecke durch die Wandung des Bunkers hindurchgeführt ist und in dem Innenraum des Bunkers gehäuselos endet, und daß die Drehachse der Befüllschnecke mit der Schwenkachse des Bunkers zusammenfallend angeordnet sind. Durch die Anwendung einer an sich bekannten Befüllschnecke, die eine Wandung des Bunkers durchsetzt, im Zusammenhang mit einem Höhenförderer, jedoch derart, daß die Drehachse der Befüllschnecke koaxial zur Schwenkachse des Bunkers angeordnet wird, ergibt sich die Möglichkeit, den Bunker in jede gewünschte Kippstellung hinein zu verschwenken, und zwar völlig unabhängig von einem Rode- oder Aufnahmevorgang und dem weiteren Transport der Rüben über den Höhenförderer in den Bunker. So ist es beispielsweise möglich, zu Beginn eines Rode- oder Aufnahmevorgangs den leeren Bunker aus seiner normalen Aufnahmestellung etwas zu kippen, und zwar derart, daß die Überladekante etwas angehoben wird, so daß der Boden des Bunkers eine etwas größere Schrägstellung bekommt. Wenn in diesem Zustand gearbeitet wird, wird die Seite des Bunkers mit der feststehenden Wandung bevorzugt befüllt. Ist ein gewisser Befüllgrad erreicht, wird der Bunker in die normale Aufnahmestellung zurückgekippt. In all diesen Stellungen ist die Abwurfhöhe der Wurzelfrüchte von der Befüllschnecke in den Bunker vergleichsweise gering, weil die Befüllschnecke die Wandung des Bunkers durchsetzt und damit selbst unterhalb des Oberrands der Wandung des Bunkers angeordnet ist. Auch werden die Wurzelfrüchte aus dem gehäuselos ausgebildeten Teil der Befüllschnecke im freien Fall und ohne nennenswerte Beschleunigung nach unten abgeworfen, so daß die Bruch- und Beschädigungsgefahr erheblich vermindert ist. Während der Dauer des Rode- oder Aufnahmevorgangs wächst der Befüllgrad im Bunker kontinuierlich, wobei sich die Abwurfhöhe schließlich zu Null verkleinert. Damit ist jedoch die Funktion der Befüllschnecke nicht beendet. Die Befüllschnecke gestattet es, den Bunker weiterzufüllen und Wurzelfrüchte gleichsam in den Bunker hineinzudrücken, wobei sich der im Bunker befindliche Haufen von Wurzelfrüchten nach oben aufwölbt und bei sehr schonendem Einbringen der Rüben in den Bunker ein überaus guter Befüllungsgrad erreicht wird. Der Höhenförderer kann an sich in verschiedener Art und Weise ausgebildet werden. Die Übergabehöhe der Wurzelfrüchte aus dem Höhenförderer in die Mulde der Befüllschnecke ist gering. Da die Drehachse der Befüllschnecke in der Schwenkachse des Bunkers angeordnet ist und diese Schwenkachse des Bunkers an der Erntemaschine nicht allzu hoch angeordnet wird, erhält der Höhenförderer auch eine vergleichsweise niedrigere Bauhöhe, da er den oberen Rand der Wandung des Bunkers nicht zu überragen braucht. Der Höhenförderer kann sehr nahe an die Wandung des Bunkers herangerückt werden, da er in die Mulde der Befüllschnecke hinein fördern muß. Er wird jedoch nicht mit dem Bunker verbunden, also nicht auf dem Bunker angeordnet, sondern auf dem Rahmen der Maschine, damit beim Verschwenken des Bunkers die Verbindungsstelle im Förderfluß beim Kippen des Bunkers nicht geöffnet wird.

Der Höhenförderer kann als auf seiner Innenseite befüllbarer Umlaufelevator ausgebildet sein, dessen Abwurfstation oberhalb der an dem Bunker abstehend angeordneten Mulde der Befüllschnecke vorgesehen ist. Ein derart ausgebildeter Höhenförderer behandelt die Wurzelfrüchte noch schonender als z. B. ein Wurfelevator. Trotzdem ist es keineswegs erforderlich, daß das umlaufende Teil des Umlaufelevators besonders lang ausgebildet ist oder etwa gar den Bunker umrunden müßte. Die Achsen des Umlaufelevators müssen auch nicht unbedingt eine große Fläche einschließen, weil der Umlaufelevator lediglich noch die Mulde an der Wandung des Bunkers umrunden muß.

Der Umlaufelevator ist zweckmäßig ortsfest am Rahmen der Erntemaschine angeordnet, so daß ein Kippvorgang des Bunkers keinerlei Einfluß auf die Arbeitsweise und die Tätigkeit des Umlaufelevators und natürlich auch der Befüllschnecke hat. Auch, wenn die Mulde der Befüllschnecke, deren Einfüllwandungen trichterförmig hochgezogen sein können, beim Kippvorgang des Bunkers mitverschwenkt wird, beeinträchtigt dies die Funktion der Befüllschnecke nicht.

Der Umlaufelevator kann um in Fahrtrichtung weisende Achsen umlaufend vorgesehen sein. Damit sind die Achsen, um die der Umlaufelevator umläuft, parallel zu der gemeinsamen Schwenkachse des Bunkers und Drehachse der Befüllschnecke vorgesehen. Die Breite des Umlaufelevators ist auf die Länge der Mulde an der Bunkerwandung abgestimmt, wobei der Umlaufelevator sehr nahe an diese Wandung des Bunkers herangerückt werden kann. Durch die Verwendung einer Befüllschnecke als zweiten Teil eines Höhenförderers ist es, im Gegensatz zur Verwendung eines Befüllbands, nicht erforderlich, die Wandung des Bunkers auf Kosten der ausnützbaren Befüllhöhe zu durchbrechen.

Der Höhenförderer bzw. Umlaufelevator kann in Fahrtrichtung vor dem Bunker und vor der Achse der Erntemaschine angeordnet sein. Dies stellt einen besonderen Vorteil dar, weil die Achse der Erntemaschine als durchgehende Achse besonders einfach gestaltet werden kann und beispielsweise die Verwendung einer Portalachse nicht erforderlich ist. Andererseits wird es möglich, infolge des Einsatzes einer durchgehenden Achsen den Boden des Bunkers vergleichsweise tiefer legen zu können, da an dieser Stelle ein Durchtritt der Wurzelfrüchte nach hinten nicht mehr erforderlich ist. Die Anordnung der Reinigungselemente, beispielsweise eines großen Siebrads, vor der Befüllstation des Umlaufelevators ist hier in geschickter Weise möglich, ohne daß damit die Anordnung des Bunkers nachteilig beeinflußt wird. Weiterhin kann der Umlaufelevator an dieser Stelle in Fahrtrichtung gesehen neben den die Rüben aufnehmenden Rode- oder Aufnahmeeinrichtungen angeordnet sein, so daß sich die Baulänge der Erntemaschine hierdurch nicht vergrößert.

Die Drehachse der Befüllschnecke und damit die Schwenkachse des Bunkers sollte unterhalb der oberen Kante der Wandung des Bunkers angeordnet sein, wobei es sich als besonders vorteilhaft erwiesen hat, wenn die Drehachse der Befüllschnecke etwa auf 2/3 der Höhe der Wandung des Bunkers und etwa um 1/3 der Breite des Bunkers in der Transportstellung von der feststehenden Wandung entfernt angeordnet ist. Damit ist es möglich, einerseits die Schwenkachse des Bunkers vorteilhaft tief anzuordnen, was im Sinne einer guten Stabilität der Erntemaschine sinnvoll ist. Gleichzeitig wird damit die Fallhöhe der Wurzelfrüchte im leeren Bunker vorteilhaft gering gehalten. Der Höhenförderer weist eine geringe Höhe auf und die Seitenwandung des Bunkers kann umlaufend weitgehend geschlossen ausgebildet und in ihrer vollen Höhe, bezogen auf die Maximalhöhe der Erntemaschine, ausgenutzt werden.

Die Befüllschnecke kann eine Welle aufweisen, die einerseits in der Stirnwandung der Mulde und andererseits in der der Mulde abgekehrten Wandung des Bunkers gelagert ist; die auf der Welle angeordnete Schneckenwendel erstreckt sich von der Stirnwand der Mulde bis etwa auf die halbe Länge des Bunkers. Damit wird eine sichere Lagerung der Welle der Befüllschnecke erreicht. Durch die koaxiale Anordnung zur Kippachse des Bunkers wird die Lagerung selbst auch einfacher, weil Teile des jeweiligen Lagers in Mehrfachfunktion benutzt werden können.

Die Erntemaschine kann mindestens eine durchgehende Achse aufweisen, über der unmittelbar der Bunker mit dem Kratzboden angeordnet ist. Die durchgehende Achse, die Laufräder trägt, ist eine sehr einfache, stabile Achskonstruktion, so daß sich auf dieser Achse auch gut der Rahmen der Maschine mit der Lagerung der Schwenkachse des Bunkers aufbauen läßt.

Eine bevorzugte Ausführungsform der Erfindung ist in den Zeichnungen dargestellt und wird im Folgenden näher beschrieben. Es zeigen:
Figur 1 eine stark schematisierte Ansicht des für die Erfindung wesentlichen Teils der Erntemaschine entgegen der Fahrtrichtung und
Figur 2 eine Draufsicht auf den Teil der Erntemaschine gemäß Figur 1.

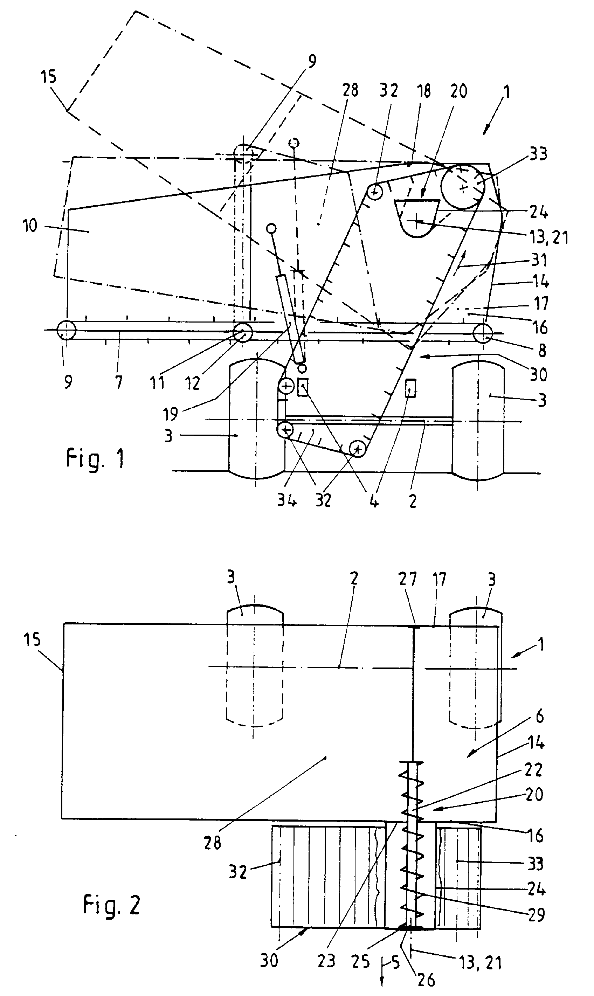

Die in den Figuren 1 und 2 dargestellte Erntemaschine 1 kann beispielsweise als gezogener einachsiger Anhänger ausgebildet sein und eine durchgehende Achse 2 aufweisen, die einerseits Räder 3 und andererseits einen Rahmen 4 der Erntemaschine tragen. Die Fahrtrichtung (Figur 2) ist durch einen Pfeil 5 gekennzeichnet.

Auf dem Rahmen 4 ist oberhalb der Räder 3 ein Bunker 6 vorgesehen, der in der Arbeitsstellung in durchgezogener Linienführung dargestellt ist, wobei ein Kratzboden 7 um Umlenkrollen 8 und 9 sich in gestreckter Lage befindet. Der Bunker weist einen Teil 10 auf, der aus der Arbeitsstellung in eine Transportstellung verschwenkbar ist, und zwar um eine Achse 11, in der sich auch eine weitere Umlenkrolle 12 des Kratzbodens 7 befindet. Die Transportstellung, in welcher der Kratzboden 7 verständlicherweise nicht in Tätigkeit gesetzt ist, ist in strichpunktierter Linienführung in Figur 1 eingezeichnet.

Der Bunker 6 ist gegenüber dem Rahmen 4 der Erntemaschine 1 um eine in Fahrtrichtung liegende Schwenkachse 13 kippbar, wobei in Figur 1 zusätzlich zu der normalen Arbeitsstellung in durchgezogener Linienführung in doppelt-gepunkteter und gestrichelter Linienführung eine Zwischenstellung dargestellt ist, in der der Bunker 6 nur leicht angekippt ist. Eine solche oder ähnliche Winkelstellung wird insbesondere zu Beginn des Rodens eingenommen, um den Bunker 6 im Bereich seiner feststehenden Wandung 14 bevorzugt zu befüllen. In gestrichelter Linienführung ist die verschwenkte Kippstellung dargestellt, bei der das Überladeende 15 des Bunkers 6 maximal angehoben ist, also die größte Überladehöhe erreicht wird. Es versteht sich, daß der Bunker 6 im Bereich des Überladeendes 15, also entgegengesetzt zur feststehenden Wandung 14, offen gestaltet ist, so daß durch den entsprechenden Antrieb des Kratzbodens 7 die Wurzelfrüchte beispielsweise auf einen Transportwagen übergeladen werden können. Der Bunker 6 besitzt weiterhin eine Wandung 16, die in Fahrtrichtung gemäß Pfeil 5 nach vorn weist sowie hinten eine Wandung 17. Die Wandungen 16 und 17 liegen einander gegenüber und sind weitgehend spiegelsymmetrisch ausgebildet und angeordnet. Der Bunker 6 besitzt eine obere Kante 18, durch die im wesentlichen die Höhe der Erntemaschine festgelegt ist bzw. bestimmt wird. Zum Kippen des Bunkers 6 um die Schwenkachse 13 dienen insbesondere hydraulisch betätigbare Zylinder 19, die einerseits am Rahmen 4 angreifen und andererseits mit der Wandung 16 bzw. 17 in Verbindung stehen.

Im Bunker 6 ist eine Befüllschnecke 20 angeordnet, deren Drehachse 21 mit der Schwenkachse 13 des Bunkers 6 zusammenfällt. Die Befüllschnecke 20 weist eine Welle 22 auf, die sich konzentrisch um die Drehachse 21 herum erstreckt. In der in Fahrtrichtung gemäß Pfeil 5 vorderen Wandung 16 des Bunkers 6 ist zur Durchführung der Befüllschnecke 20 eine Öffnung 23 vorgesehen, an die sich bezüglich der Wandung 16 des Bunkers 6 nach vorn und außen eine Mulde 24 anschließt, die eine in Fahrtrichtung gemäß Pfeil 5 weisende Stirnwand 25 aufweist, ansonsten muldenförmig ausgebildet ist und oben offen ist. Die Welle 22 der Befüllschnecke 20 ist in der Stirnwand 25 in einem Lager 26 und in der hinteren Wandung 17 in einem Lager 27 drehbar gelagert, wobei die Ausbildung der Lager 26 und 27 zugleich so getroffen sein kann, daß hierdurch auch die kippbare Lagerung des Bunkers 6 gebildet wird. Die Befüllschnecke 22 ist im Bereich der Mulde 24 sowie über einen gewissen Bereich in den Innenraum 28 des Bunkers 6 hinein mit einer Förderwendel 29 versehen. Die Förderwendel 29 endet an dieser Stelle, während die Welle 22 bis zum Lager 27 durchgeht. Während außerhalb des Behälters 6 bzw. des Innenraums 28 des Behälters 6 der Förderwendel 29 kein Gehäuse zugeordnet ist, erfüllt die Mulde 24 diese Funktion außerhalb des Bunkers 6.

In Fahrtrichtung gemäß Pfeil 5 gesehen vor der Wandung 16, jedoch aufgelagert auf dem Rahmen 4 und nicht auf dem Bunker 6, ist ein innen befüllbarer Umlaufelevator 30 vorgesehen, der gemäß Pfeil 31 umlaufend angetrieben wird. Hierzu sind verschiedene Umlenkwalzen 32 und 33 vorgesehen. Zwischen den untersten Umlenkwalzen 32 ist eine innenliegende Befüllstation 34 gebildet. Die Wurzelfrüchte, insbesondere Zuckerrüben, werden über eine Reinigungseinrichtung, beispielsweise ein um eine vertikale Achse angetriebenes Siebrad, an der Befüllstation 34 innen auf den Umlaufelevator aufgegeben. Sie wandern dann nach oben und werden über die Umlenkwalze 33 in die Mulde 24 der Befüllschnecke abgeworfen. Der Umlaufelevator 30 kann mit seinem umlaufenden Teil mit vergleichsweise niedriger Geschwindigkeit angetrieben werden, so daß der Abwurf der Rüben in die Mulde 24 hinein nahezu ohne Beschleunigung erfolgt. Außerdem ist die Abwurfhöhe vergleichsweise gering. Die Rüben werden dann durch die Förderwendel 29 der Befüllschnecke 20 erfaßt, durch die Öffnung 23 in der Wandung 16 hindurchgeführt und können im freien Fall, wiederum mit vergleichsweise geringer Fallhöhe, in den Bunker 6 gelangen. Man erkennt, daß die Drehachse 21 der Befüllschecke 20 und die koaxiale Schwenkachse 13 des Bunkers 6 etwa auf 2/3 der Höhe der Wandung 14, 16, 17 des Bunkers 6 und um etwa 1/3 der Breite des Bunkers 6 in der Transportstellung von der feststehenden Wandung 14 in Richtung auf das Überladeende 15 versetzt angeordnet ist. Hierauf ist es wiederum zurückzuführen, daß einerseits niedrige Abwurfhöhen erreicht werden. Andererseits kann der Umlaufelevator 30 selbst nur eine geringe Höhe aufweisen. Er endet beispielsweise oben unterhalb der Kante 18 des Bunkers 6. Die Achsen der Umlenkwalzen 32 und 33 sind in Fahrtrichtung gemäß Pfeil 5 angeordnet, laufen also parallel zur Längsmittelachse der Erntemaschine. Auch der umlaufende, bewegliche Teil des Umlaufelevators 30 kann hier vergleichsweise kürzer gehalten werden als bei einem Umlaufelevator, der den Bunker 6 umrundet. Wenn der Bunker 6 bis zur Höhe der Schwenkachse 13 bzw. der Drehachse 21 mit Wurzelfrüchten beladen ist, ist die maximale Aufnahmekapazität des Bunkers 6 noch nicht erreicht, sondern ein Rode- oder ein Aufnahmevorgang kann mit der Erntemaschine 1 durchaus fortgesetzt werden. Es werden dann die Rüben in den Innenraum 28 des Bunkers 6 über die Befüllschecke 20 hineingedrückt, wodurch nicht nur eine Verlagerung der Rüben im Innenraum 28 in Richtung auf das hintere Ende des Bunkers 6 statfindet, sondern auch die Rüben nach oben bergartig aufquellend angehoben werden, wobei die dann am Ende des Rodevorgangs am höchsten liegenden Rüben durchaus ein höheres Niveau erreichen können als die obere Kante 18 des Innenraums 28 des Bunkers 6.

Es wurde bereits darauf hingewiesen, daß der Bunker 6 ohne Unterbrechung der Rode- oder Aufnahmearbeit in jede beliebige Schräglage gekippt werden kann, wobei sowohl die Kippung selbst als auch das Beibehalten der jeweiligen Kipplage unabhäng vom Rode- und/oder Aufnahmevorgang durchführbar ist. Beim Kippen ändern sich die Verhältnisse am Umlaufelevator 30 nicht, abgesehen von einer geringfügigen Verdrehung der Mulde 24, die jedoch das Abwerfen der Rüben von dem Umlaufelevator 30 in die Mulde 24 nicht behindert. Hieraus wird es auch verständlich, daß zum Zwecke des Überladens von Rüben aus dem Innenraum 28 des Bunkers 6 auf einen neben der Erntemaschine 1 herfahrenden Transportwagen der Rode- und/oder Aufnahmevorgang nicht unterbrochen werden muß. Es gehen während dieses Überladens auch keine Rüben verloren, sondern diese gelangen nach wie vor auch dann über die Befüllschnecke in den Innenraum 28. Man erkennt anhand der Figur 1, daß die Höhe der Wandungen 14, 16, 17 des Bunkers 6 nur durch die vorgesehene Maximalhöhe und den Durchmesser der Räder 3 beschränkt ist. Eine durchgehende Achse 2 ist keineswegs hinderlich, weil die Rüben den Zwischenraum an dieser Stelle nicht passieren müssen, wie dies bei einem hinter dem Bunker 6 angeordneten Umlaufelevator der Fall wäre. Hier werden die Rüben bereits vor der Achse 2 an der Befüllstation 34 in den Umlaufelevator 30 abgegeben. Im Gegenteil, es besteht ausreichend Platz für die Anordnung eines mit einem großen Durchmesser versehenen Siebrads (nicht dargestellt) zwischen der Achse 2 und der Befüllstation 34. Andererseits zeigt aber auch die schmale Bauweise in Fahrtrichtung gemäß Pfeil 5, daß der Umlaufelevator 30 relativ nahe an die Wandung 16 des Bunkers 6 herangerückt werden kann, was bezüglich Baulänge sinnvoll ist. Auf die Zwischenschaltung von Beschickungsbändern o. dgl. wird hier verzichtet. Figur 1 läßt erkennen, daß der Umlaufelevator 30 quer zur Fahrtrichtung gemäß Pfeil 5 gesehen schmal baut, so daß hier ein Raum zur Verfügung steht, um neben dem Umlaufelevator 30 Rode- oder Aufnahmewerkzeuge anzuordnen.

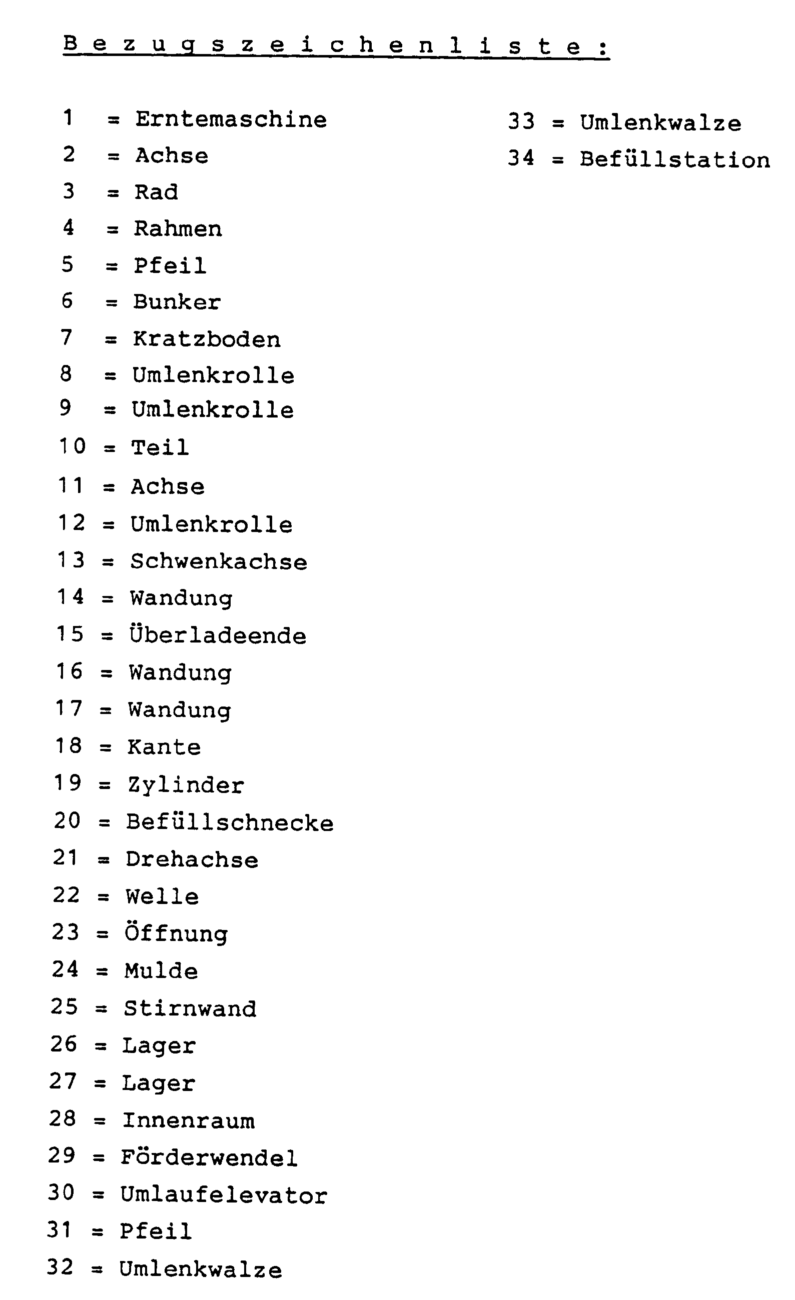

## Patentansprüche

1. Erntemaschine (1) für Wurzelfrüchte, insbesondere Zuckerrüben, mit mindestens einer die Wurzelfrüchte rodenden oder vom Boden aufnehmenden und ggf. reinigenden Einrichtung, von der die Wurzelfrüchte über einen Höhenförderer in einen mit einem Kratzboden (7) versehenen Bunker (6) gelangen, der um eine in Fahrtrichtung liegende Schwenkachse (13) kippbar ist, dadurch gekennzeichnet, daß zwischen dem Höhenförderer (30) und dem Bunker (6) eine um eine Drehachse (21) angetriebene Befüllschnecke (20) mit einer gehäuseartigen Mulde (24) vorgesehen ist, daß die Mulde (24) außerhalb des Bunkers (6) an dessen Wandung (16) dem Höhenförderer (30) zugekehrt angeordnet ist und die Befüllschnecke (20) durch die Wandung (16) des Bunkers (6) hindurchgeführt ist und in dem Innenraum (28) des Bunkers (6) gehäuselos endet, und daß die Drehachse (21) der Befüllschnecke (20) mit der Schwenkachse (13) des Bunkers (6) zusammenfallend angeordnet sind.

2. Erntemaschine nach Anspruch 1, dadurch gekennzeichnet, daß der Höhenförderer als auf seiner Innenseite befüllbarer Umlaufelevator (30) ausgebildet ist, dessen Abwurfstation oberhalb der an dem Bunker (6) abstehend angeordneten Mulde (24) der Befüllschnecke (20) vorgesehen ist.

3. Erntemaschine nach Anspruch 2, dadurch gekennzeichnet, daß der Umlaufelevator (30) ortsfest am Rahmen (4) der Erntemaschine (1) angeordnet ist.

4. Erntemaschine nach Anspruch 3, dadurch gekennzeichnet, daß der Umlaufelevator (30) um in Fahrtrichtung (5) weisende Achsen (32, 33) umlaufend vorgesehen ist.

5. Erntemaschine nach einem der Ansprüche 1 bis 4, dadurch gekennzeichnet, daß der Höhenförderer bzw. Umlaufelevator (30) in Fahrtrichtung (5) vor dem Bunker (6) und vor einer Achse (2) der Erntemaschine (1) angeordnet ist.

6. Erntemaschine nach Anspruch 1, dadurch gekennzeichnet, daß die Drehachse (21) der Befüllschnecke (20) und damit die Schwenkachse (13) des Bunkers (6) unterhalb der oberen Kante (18) der Wandung (14, 16, 17) des Bunkers (6) angeordnet sind.

7. Erntemaschine nach Anspruch 6, dadurch gekennzeichnet, daß die Drehachse (21) der Befüllschnecke (20) etwa auf 2/3 der Höhe der Wandung (14, 16, 17) des Bunkers (6) und etwa um 1/3 der Breite des Bunkers (6) in der Transportstellung von der feststehenden Wandung (14) entfernt angeordnet ist.

8. Erntemaschine nach einem der Ansprüche 1 bis 7, dadurch gekennzeichnet, daß die Befüllschnecke (20) eine Welle (22) aufweist, die einerseits in der Stirnwandung (25) der Mulde (24) und andererseits in der der Mulde (24) abgekehrten Wandung (17) des Bunkers (6) gelagert ist, und daß die auf der Welle (22) angeordnete Schneckenwendel (29) sich von der Stirnwand (25) der Mulde (24) bis etwa auf die halbe Länge des Bunkers (6) erstreckt.

9. Erntemaschine nach einem der Ansprüche 1 bis 8, dadurch gekennzeichnet, daß die Erntemaschine (1) mindestens eine durchgehende Achse (2) aufweist, über der unmittelbar der Bunker (6) mit dem Kratzboden (7) angeordnet ist.

## Claims

1. Harvesting machine (1) for root crops, particularly for sugar beets, comprising at least a device for digging up or picking up the root crops from the ground and possibly for cleaning them, from which the root crops are transported via an elevator to a bunker (6) which is provided with a scraper floor (7), whereby said bunker (6) can be tilted about a swivelling axis (13) lying in the direction of travel, characterized in that between the elevator (30) und the bunker (6) a filling screw (20) is provided which has a housing-like trough (24) and which is driven around a rotational axis (21), that the trough (24) is arranged outside the bunker (6) on the bunker wall (16) such that it faces the elevator (30) and the filling screw (20) passes through the wall (16) of the bunker (6) and ends in the interior (28) of the bunker (6) without a housing, and that the rotational axis (21) of the filling screw (20) is arranged such that it coincides with the swivelling axis (13) of the bunker (6).

2. Harvesting machine according to claim 1, characterized in that the elevator is constructed as an endless elevator (30) which is to be filled on its inner side, whereby its discharge station is provided above the trough (24) of the filling screw which is arranged projecting from the bunker (6).

3. Harvesting machine according to claim 2, characterized in that the endless elevator (30) is fixed locally to the frame (4) of the harvesting machine (1).

4. Harvesting machine according to claim 3, characterized in that the endless elevator (30) is arranged revolving around axes (32, 33) pointing in the direction of travel (5).

5. Harvesting machine according to one of the claims 1 to 4, characterized in that the elevator, or rather endless elevator (30), is arranged in the direction of travel (5) in front of the bunker (6) and in front of an axis (21) of the harvesting machine (1).

6. Harvesting machine according to claim 1, characterized in that the rotational axis (21) of the filling screw (20) and thus the swivelling axis (13) of the bunker (6), are arranged below the upper edge (18) of the wall (14, 16, 17) of the bunker (6).

7. Harvesting machine according to claim 6, characterized in that the rotational axis (21) of the filling screw (20) is arranged at a height of above approx. 2/3 the height of the wall (14, 16, 17) of the bunker (6) and at a distance of about 1/3 of the width of the bunker (6) from the fixed wall (14) in the transport position.

8. Harvesting machine according to one of the claims 1 to 7, characterized in that the filling screw (20) has a shaft (22), one end of which is supported on the end wall (25) of the trough (24) and the other end of which on the wall (17) of the bunker (6) remote from the trough (24), and that the screw helix (29) arranged on the shaft (22) extends from the end wall (25) of the trough (24) to about halfway along the length of the bunker (6).

9. Harvesting machine according to one of the claims 1 to 8, characterized in that the harvesting machine (1) has at least one continuous shaft (2), directly above which the bunker (6) with its scraper floor (7) is located.

## Revendications

1. Machine de récolte (1) pour récolter des racines, en particulier des betteraves à sucre, avec au moins un dispositif arrachant les racines ou les ramassant au sol, et les nettoyant, le cas échéant, à partir duquel les racines parviennent, au moyen d'un transporteur élévateur, dans une benne (6) munie d'un fond à râclettes (7), qui est basculante autour d'un axe de pivotement (13) disposé dans le sens de marche,
**caractérisée** en ce qu'il est prévu entre le transporteur élévateur (30) et la benne (6) une vis de remplissage (20) entraînée autour d'un axe de rotation (21) avec une auge (24) analogue à un boîtier, en ce que l'auge (24) est disposée à l'extérieur de la benne (6) sur la paroi (16) de celle-ci, en étant orientée vers le transporteur élévateur (30), et en ce que la vis de remplissage (20) traverse la paroi (16) de la benne (6) et se termine sans boîtier dans l'espace intérieur (28) de la benne (6), et en ce que l'axe de rotation (21) de la vis de remplissage (20) coïncide avec l'axe de pivotement (13) de la benne (6).

2. Machine de récolte selon la revendication 1, caractérisée en ce que le transporteur élévateur est sous la forme d'un élévateur circulant (30) pouvant être rempli sur son côté intérieur, dont le poste de déversement est prévu au-dessus de l'auge (24) de la vis de remplissage (20) disposée sur la benne (6) à l'écart de celle-ci.

3. Machine de récolte selon la revendication 2, caractérisée en ce que l'élévateur circulant (30) est monté à poste fixe sur le châssis (4) de la machine de récolte (1).

4. Machine de récolte selon la revendication 3, caractérisée en ce que l'élévateur circulant (30) est prévu pour circuler autour d'axes (32, 33) orientés dans le sens de marche (5).

5. Machine de récolte selon une des revendications 1 à 4, caractérisée en ce que le transporteur élévateur ou l'élévateur circulant (30) est disposé dans le sens de marche (5) en avant de la benne (6) et en avant d'un essieu (2) de la machine de récolte (1).

6. Machine de récolte selon la revendication 1, caractérisée en ce que l'axe de rotation (21) de la vis de remplissage (20) et, par suite, l'axe de pivotement (13) de la benne (6) sont disposés en dessous du bord supérieur (18) de la paroi (14, 16, 17) de la benne (6).

7. Machine de récolte selon la revendication 6, caractérisée en ce que l'axe de rotation (21) de la vis de remplissage (20) est disposé environ aux 2/3 de la hauteur de la paroi (14, 16, 17) de la benne (6) et environ au 1/3 de la largeur de la benne (6) en position de transport, en s'éloignant de la paroi fixe (14).

8. Machine de récolte selon une des revendications 1 à 7, caractérisée en ce que la vis de remplissage (20) présente un arbre (22) monté sur des paliers, d'une part dans la paroi frontale (25) de l'auge (24) et d'autre part dans la paroi (17) de la benne (6) opposée à l'auge (24), et en ce que l'hélice transporteuse (29) disposée sur l'arbre (22) s'étend à partir de la paroi frontale (25) de l'auge (24) jusqu'à environ la mi-longueur de la benne (6).

9. Machine de récolte selon une des revendications 1 à 8, caractérisée en ce que la machine de récolte (1) présente au moins un essieu continu (2), au-dessus duquel est directement disposée la benne (6) avec le fond à râclettes (7).
